# EUROPÄISCHE PATENTSCHRIFT

(11) **EP 3 470 937 B1**
(45) Veröffentlichungstag und Bekanntmachung des Hinweises auf die Patenterteilung: **23.08.2023**
(21) Anmeldenummer: 18198915.3
(22) Anmeldetag: 05.10.2018
(51) Int. Cl.: G05B 9/02, G05B 19/042

(54) **VERFAHREN UND VORRICHTUNGEN ZUM ÜBERWACHEN DER REAKTIONSZEIT EINER DURCH EIN SICHERHEITSSYSTEM BEREITGESTELLTEN SICHERHEITSFUNKTION**
METHOD AND DEVICES FOR MONITORING THE RESPONSE TIME OF A SECURITY FUNCTION PROVIDED BY A SECURITY SYSTEM
PROCÉDÉ ET DISPOSITIFS DE SURVEILLANCE DU TEMPS RÉACTIONNEL D'UNE FONCTION DE SÉCURITÉ FOURNIE PAR UN SYSTÈME DE SÉCURITÉ

(30) Priorität: 13.10.2017 DE 102017123911
(43) Veröffentlichungstag der Anmeldung: 17.04.2019
(73) Patentinhaber: Phoenix Contact GmbH & Co. KG, 32825 Blomberg (DE)
(72) Erfinder: Borgmann, Hendrik, 32805 Horn-Bad Meinberg (DE)
(74) Vertreter: Blumbach · Zinngrebe Patentanwälte PartG mbB

(56) Entgegenhaltungen:
- EP-A1- 3 211 501
- WO-A1-2017/137326
- DE-A1-102014 114 883
- DE-T2-602004 005 645

## Beschreibung

Die vorliegende Erfindung betrifft ein Verfahren zum Überwachen der Reaktionszeit einer durch ein Sicherheitssystem bereitgestellten Sicherheitsfunktion, sowie ein System zur Durchführung des Verfahrens. Das Sicherheitssystem stellt dabei eine Sicherheitsfunktion bereit und ist aus wenigstens zwei Teilsystem-Modulen modular aufgebaut, wobei diese an einen Datenübertragungskanal angeschaltet sind und insbesondere jeweils eine Teilsicherheitsfunktion bereitstellen und für eine funktional sichere Datenverarbeitung und/oder -übertragung ausgebildet sind.

Zur Reduzierung eines Risikos für Mensch oder Umwelt bei automatisierten Prozessen, Maschinen und Anlagen müssen Sicherheitsfunktionen realisiert werden, wie z.B. die Abschaltung einer Maschine nach Drücken eines Not-Aus-Tasters oder die Überführung der Anlage in den Sicheren Zustand nach Erkennen eines Fehlers. Hier werden zunehmend fehlersichere Automatisierungssysteme innerhalb der automatisierten Prozesse, Maschinen und Anlagen eingesetzt. Im Allgemeinen realisieren diese fehlersicheren Automatisierungssysteme einerseits die eigentliche Sicherheitsfunktion, wie z.B. Not-Aus, Zweihand-Schaltung, Betriebsartenwahlschalter, oder ähnliches, und andererseits auch fehlererkennende und - beherrschende Maßnahmen nach z.B. in Standards wie IEC 61508, ISO 13849 und anderen festgelegten Mechanismen, welche dem aktuellen Stand der Technik entsprechen.

Hierbei betrifft der Begriff "Sicherheit" im Rahmen der Erfindung sowie in der Beschreibung und den Ansprüchen, soweit nicht anderes angegeben ist, die funktionale Sicherheit. Im englischen Sprachraum wird die funktionale Sicherheit auch mit den Begriffen "safe" und "safety" bezeichnet, in Abgrenzung zu den Begriffen "secure" und "security", welche typischerweise für eine elektrische Sicherheit oder auch den Schutz der technischen Verarbeitung von Informationen zur Verhinderung nicht-autorisierter Datenmanipulationen oder Preisgabe von Informationen verwendet werden.

In der internationalen Norm IEC 61508 bzw. in der im Wesentlichen inhaltsgleichen Europäischen Norm EN 61508 werden funktional sichere elektrische, elektronische und programmierbar elektronische Systeme unter anderem auch hinsichtlich deren Entwicklung beschrieben. Die darin vorgegebenen Anforderungen an den Entwicklungsprozess von sicheren Systemen führen zu signifikant höherem Aufwand und benötigtem Entwicklungsbudget im Vergleich zur Entwicklung von Standardsystemen. Dabei nehmen die Anforderungen mit zunehmendem Sicherheitsintegritätslevel (SIL; SIL1 bis SIL4) zu. Mit dem Begriff Sicherheitsintegritätslevel, oder auch Sicherheitsanforderungsstufe, wird über den jeweiligen Level ein bestimmtes Maß für die notwendige bzw. erreichte Wirksamkeit von Sicherheitsfunktionen zur Risikominderung definiert. Wenn keine sicherheitsgerichteten (auch als sicherheitsbezogen oder sicherheitsrelevant bezeichnet) Anforderungen gelten, so ist die Entwicklung nach den normalen Standards des betrieblichen Qualitätsmanagements durchzuführen. Darüber hinaus stellt der Sicherheitsintegritätslevel SIL1 die geringsten Anforderungen. Je höher der Sicherheitsintegritätslevel, desto höher sind auch die Anforderungen an die Sicherheit.

Die funktionale Sicherheit gemäß der Norm IEC 61508 umfasst zum Beispiel die Anwendung diverser Methoden zur Beherrschung von Fehlern, wie beispielsweise die Vermeidung systematischer Fehler in der Entwicklung, die Überwachung im laufenden Betrieb zur Erkennung von zufälligen Fehlern und/oder die sichere Beherrschung von erkannten Fehlern und den Übergang in einen vorher als sicher definierten Zustand. Alle diese Maßnahmen können Teil von bestimmten, vorher festgelegten Sicherheitsfunktionen sein. Allgemein kann gesagt werden, dass zwei- oder mehrkanalige Systeme, bei denen jeder Kanal für sich allein eine Sicherheitsfunktion auslösen kann, mit weniger technischem Aufwand eine höhere SIL erreichen können als solche, die nur einen Kanal besitzen. Als Kanal wird dabei der Informationsfluss durch eine Sicherheitskette bezeichnet, angefangen zum Beispiel von der Anforderung einer Sicherheitsfunktion, zum Beispiel durch einen Näherungsmelder, eine Lichtschranke, einen Taster, oder eine andere Art von Sensor, endend mit dem Aktor bzw. Stellglied, welches den sicheren Zustand einer Maschine einleitet. Im englischen Sprachraum wird eine Sicherheitskette mit dem Begriff "safety chain" bezeichnet, gegebenenfalls auch mit dem Begriff "safety loop", auch wenn die Sicherheitskette Schleife bildet oder bilden muss.

Ist durch geeignete Maßnahmen somit gewährleistet, dass ein elektrisches, elektronisches und/oder programmierbar elektronisches System, aber auch ein einzelnes Teilsystem-Modul oder auch eine einzelne Hardware- und/oder Software-Komponente eine bestimmte Sicherheitsfunktion wirksam erfüllt, gilt dieses System bzw. das jeweilige Teilsystem-Modul im Rahmen der nachfolgenden Beschreibung und der Ansprüche als sicher oder sicherheitsgerichtet. Ein System, das eine oder mehrere bestimmte Sicherheitsfunktionen erfüllen soll und hierbei aus einer Mehrzahl von Teilsystem-Modulen, d.h. aus wenigstens zwei Teilsystem-Modulen, aufgebaut ist, welche jeweils für sich wiederum Teilsicherheitsfunktionen erfüllen sollen, gilt im Rahmen der Erfindung als Sicherheitssystem.

In aktuellen Maschinen und Anlagen werden abhängig von der Ausdehnung der Anlagen und vom Automatisierungsgrad Kommunikationssysteme, oder auch Datenübertragungssysteme, wie z.B. Ethernet-basierte Netzwerke oder Feldbusse, verwendet, die dezentrale Eingabe-/Ausgabe-Geräte, oder kurz E/A-Geräte, wie z.B. Sensoren bzw. Aktoren, und Steuerungen verbinden. Für die Übertragung von sicherheitsrelevanten Daten werden in der Regel sichere Kommunikationsprotokolle, oder auch Datenübertragungs- bzw. Netzwerkprotokolle, benutzt. Sichere Kommunikationsprotokolle sind heutzutage standardisiert, z.B. in der IEC 61784-3. Dort werden basierend auf Grundsätzen der sicheren Netzwerkkommunikation unterschiedliche Sicherheitsprofile beschrieben. Alle diese Netzwerkprotokolle müssen die unterschiedlichen Fehlermodelle, wie z.B. Verfälschung, Verlust, Verzögerung, Vertauschung und so weiter von Daten und/oder Telegrammen, beherrschen. Die Wirksamkeit der risikominimierenden technischen Maßnahmen in Maschinen und/oder Anlagen muss während der Inbetriebnahme einer Maschine oder Anlage durch eine Gesamtsicherheitsvalidierung nachgewiesen und protokolliert bzw. dokumentiert werden. Hierbei müssen alle Sicherheitsfunktionen vor Übergang in die Betriebsphase der Maschine oder Anlage in ihrer Wirksamkeit überprüft werden. Dies ist bei einer vollständigen und nicht veränderten Maschine oder Anlage noch überschaubar, wird allerdings in zunehmend häufiger vorkommenden modularen Maschinen oder Anlagen immer aufwändiger und komplexer.

Wird darüber hinaus eine Vielzahl von Maschinen und/oder Anlagen innerhalb eines Systems eingesetzt, welche auch Sicherheitsfunktionen zusammenwirkend realisieren müssen, bilden diese im Rahmen der Erfindung Teilsystem-Module des Systems, welches dann aus der Vielzahl dieser Teilsystem-Module zusammen ein Sicherheitssystem oder auch mehrere Sicherheitssysteme ausbildet. Hier muss demnach die Wirksamkeit der risikominimierenden technischen Maßnahmen durch eine Gesamtsicherheitsvalidierung des die beteiligten Teilsystem-Module übergreifenden Sicherheitssystems nachgewiesen werden. Als Beispiel für ein solches Sicherheitssystem sei eine Stanzanlage genannt, welche aus einer Zuführmaschine, einer Stanzmaschine und einer Auswurfmaschine gebildet ist, die alle drei bestimmte Sicherheitsfunktionen realisieren müssen, wobei auch die Stanzanlage insgesamt als zu betrachtendes Sicherheitssystem, d.h. beim Zusammenwirken der einzelnen Teilsystem-Module, d.h. gemäß Beispiel die Zuführmaschine, Stanzmaschine und Auswurfmaschine, bestimmte Sicherheitsfunktionen realisieren muss. Ein solches Sicherheitssystem im Rahmen der Erfindung besitzt somit in der Regel mehrere fehlersichere Automatisierungseinrichtungen, die in verschiedenen Teilsystem-Modulen innerhalb eines Systems, d.h. eines Gesamtsystems angeordnet sind, jedoch innerhalb des Systems zusammenwirken und übergreifend über die beteiligten Teilsystem-Module ein Sicherheitssystem ausbilden.

Eine Gesamtsicherheitsvalidierung des die beteiligten Teilsystem-Module übergreifenden Sicherheitssystems muss jedoch nicht nur bei der ersten Inbetriebnahme erfolgen. Dies gilt ebenso für jede Änderung der Konfiguration eines modularen Sicherheitssystems, einer modularen Anlage oder Maschine. Für jede Konfiguration müssen die Kennwerte neu berechnet und dokumentiert, neue Fehlerbetrachtungen, Fehlerrechnungen und Validationsschritte zum Nachweisen der für das System oder die Maschine notwendigen Sicherheitskategorie, bzw. Sicherheitslevels, z.B. SIL4, ausgeführt werden, so z.B. beim Austausch eines einzelnen Moduls oder auch in Folge von Alterungsprozessen innerhalb einzelner Module. Dabei müssen die sicherheitsrelevanten Kennwerte der einzelnen Module entsprechend ihrem Zusammenwirken funktional kombiniert werden. Diese Kennwerte sind typischerweise in Gerätebeschreibungen dokumentiert und müssen zum Zeitpunkt der Berechnung aktuell sein. Die einschlägigen Sicherheitsnormen und Richtlinien verpflichten die Maschinenhersteller, die sicherheitsrelevanten Kennwerte wie z.B. Ausfallraten, Diagnosedeckungsgrad, SFF (Safe Failure Fraction), HFT (Hardware Fault Tolerance) oder Reaktionszeiten für einzelne Module anzugeben. Für die Berechnung der sicherheitsrelevanten Kennwerte werden heute Offline-Software-Tools, wie z.B. SISTEMA (Sicherheit von Steuerungen an Maschinen) vom Institut für Arbeitsschutz der Deutschen Gesetzlichen Unfallversicherung (IFA), verwendet.

Des Weiteren muss aber auch während des Betriebs des Sicherheitssystems bzw. der sicheren Anlage oder Maschine die Funktionsfähigkeit sowie die Wirksamkeit der technischen, risikominimierenden Maßnahmen in definierten Zeitintervallen getestet werden.

Der Modularisierung von Maschinen, Anlagen oder Sicherheitssystemen sowie dynamischen Konfigurationsänderungen oder adaptiven Zusammenstellungen von vormals unbekannten Sicherheitsmodulen tragen aber die heutigen Sicherheitsstandards, wie z.B. IEC 61508, EN 13849, IEC 62061, zumindest bisher nur teilweise Rechnung.

Ferner ist die heutige Zeit geprägt von cyber-physischen Systemen (CPS, engl. cyber physical systems), der Verteilung von Intelligenzen und dem Internet der Dinge (engl. Internet of things, IoT). Unter Industrie 4.0 wird der Einzug von Internet-Technologien in die Automatisierungstechnik beschrieben. Die komplette Vernetzung intelligenter Geräte vom Sensor/Aktor bis zur Steuerung ist die Voraussetzung für Modularisierung, Wiederverwendung und Adaptionsfähigkeit von Maschinen- und Anlagenmodulen. Produktionsvorgänge können dann weiter optimiert werden und es kann z.B. in Losgrößen 1 gefertigt werden. Die Einbindung und Nutzung von Cloud-Diensten ermöglicht z.B. vorausschauende Diagnosen. All diese Trends und Technologien tragen ihrerseits zur steigenden Komplexität modularer Anlagen, Maschinen und Sicherheitssysteme sowie zum erhöhten Aufwand bei der Gesamtsicherheitsvalidierung bei.

Es versteht sich, dass dieser für die Gesamtsicherheitsvalidierung erforderliche und zunehmend höhere Aufwand nicht den Flexibilitätsanforderungen der Hersteller und Betreiber modularer Sicherheitssysteme, Anlagen und Maschinen entspricht.

Diesbezüglich schlägt die EP 2 359 201 ein Verfahren zum Bestimmen einer Sicherheitsstufe in einem Automatisierungsnetzwerk mit einer Mehrzahl von sicherheitsrelevanten Teilnehmern vor. Dieses umfasst die Schritte: selbsttätiges Ermitteln der daten- und ablauftechnischen Verknüpfungen zwischen den Teilnehmer im Automatisierungsnetzwerk durch ein Konfigurationserfassungsmodul; selbsttätiges Ermitteln der teilnehmerspezifischen Sicherheitskenndaten durch ein Kenndatenerfassungsmodul; und Berechnen der Sicherheitsstufe in dem Automatisierungsnetzwerk mithilfe einer Berechnungsvorschrift, die die ermittelten daten- und ablauftechnischen Verknüpfungen der Teilnehmer im Automatisierungsnetzwerk und die ermittelten teilnehmerspezifischen Sicherheitskenndaten verbindet. Das Konfigurationserfassungsmodul und das Kenndatenerfassungsmodul sind dabei Teil eines zentralen Sicherheitsmanagers, der online über ein Netzwerk auf die an einer Sicherheitsfunktion beteiligten Komponenten zugreift.

Darüber hinaus schlägt die hiesige Anmelderin in deren früheren Anmeldung DE 10 2015 103 359 ein Verfahren zur automatischen Validierung von Sicherheitsfunktionen an einem modular aufgebauten Sicherheitssystem vor, wobei an das Sicherheitssystem eine auch als Safety-Validator bezeichnete zentrale Überprüfungseinrichtung angeschaltet wird. Das Verfahren umfasst u.a. die Schritte: Übertragen der lokalen, modulspezifischen sicherheitsrelevanten Ist-Kennwerte aus den einzelnen Teilsystem-Modulen an die Überprüfungseinrichtung, automatisches Verarbeiten der ausgelesenen, lokalen, modulspezifischen sicherheitsrelevanten Ist-Kennwerte zu sich beim Zusammenwirken der einzelnen Teilsystem-Module ergebenden, übergreifenden sicherheitsrelevanten Ist-Kennwerten, und zwar durch jene Überprüfungseinrichtung; automatisches Vergleichen der sich ergebenden, übergreifenden sicherheitsrelevanten Ist-Kennwerte mit den im Speicher der Überprüfungseinrichtung hinterlegten Soll-Kennwerten des Systems, und zwar durch die Überprüfungseinrichtung und automatisches Generieren eines Reaktionssignals in Abhängigkeit vom Ergebnis des Vergleiches. Somit überprüft der sogenannte Safety-Validator während der Inbetriebnahme und zur Laufzeit online sich ändernde sicherheitsrelevante Parameter von dezentralen Teilsicherheitsfunktionen, kombiniert diese, überwacht die Einhaltung vorkonfigurierter Grenzen und kann bei deren Überschreitung das System in einen sicheren Zustand überführen.

Des Weiteren schlägt die hiesige Anmelderin in deren früheren Anmeldung DE 10 2015 103 740 ein Verfahren zum Verarbeiten und Übertragen von Daten innerhalb eines funktional sicheren elektrischen, elektronischen oder programmierbar elektronischen Systems vor, welches aus wenigstens zwei Sub-Systemen aufgebaut wird, welche jeweils einem bestimmten Sicherheitslevel genügen. Es umfasst die Schritte: Verarbeiten von Daten mittels der sicheren Hardware- und/oder Software-Komponente eines ersten der Sub-Systeme zu funktional sicheren Daten eines ersten Sicherheitslevels und Hinzufügen zu diesen Daten wenigstens ein Kennzeichnungsattribut, welches die Eignung dieser Daten für den Einsatz dieses ersten Sicherheitslevels kennzeichnet; Übertragen dieser Daten einschließlich des hinzugefügten Kennzeichnungsattributs an ein zweites dieser Sub-Systeme; und Prüfen des empfangenen Kennzeichnungsattributs durch das zweite Sub-System mittels dessen sicherer Hardware- und/oder Software-Komponente dahingehend, ob der Sicherheitslevel, den dieses Kennzeichnungsattribut kennzeichnet, gegenüber dem Sicherheitslevel, welchem das zweite Sub-System genügt, gleich oder ungleich ist, und, wenn die Prüfung ungleiche Sicherheitslevel ergibt funktional sicheres Weiterverarbeiten der Daten basierend auf dem geringeren Sicherheitslevel.

Sowohl die EP 2 359 201 als auch die DE 10 2015 103 359 sehen eine zentrale Instanz in Form eines Sicherheitsmanagers bzw. einer Überprüfungseinrichtung vor. Dies kann jedoch zu einer Einschränkung der Flexibilität und Handhabbarkeit führen, insbesondere mit Blick auf die Überwachung der Sicherheitskette einer Gesamtsicherheitsfunktion eines modularen Sicherheitssystems während des laufenden Betriebs. Außerdem besteht ein zusätzlicher Hardwareaufwand.

Die Anmeldungen DE602004005645T und EP3211501 offenbaren jeweils industrielle Sicherheitscontroller, die Signale von elektrischen Sensoren in einem Sicherheitsprozess empfangen, verarbeiten und weiter Signale für elektrische Stellorgane in dem Sicherheitsprozess bereitstellen, wobei die tatsächliche Ausbreitungsverzögerung der Signale bis zum und im Controller bestimmt wird.

Die Aufgabe der vorliegenden Erfindung besteht darin, die Überwachung einer durch ein Sicherheitssystem, insbesondere eine Sicherheitskette, bereitgestellten Sicherheitsfunktion, insbesondere die Überwachung auf Einhaltung vorgegebener Reaktionszeiten, zu vereinfachen und/oder zu verbessern. Zudem soll eine solche vereinfachte Überwachung insbesondere auch bei dynamischen und/oder sich in ihrer Konfiguration ändernden modularen Sicherheitssystemen ermöglicht werden.

Diese Aufgabe wird durch die Merkmale der unabhängigen Ansprüche gelöst. Vorteilhafte Ausführungsformen sind Gegenstand der abhängigen Ansprüche, wobei die angegebenen Merkmale und Vorteile im Wesentlichen für alle unabhängigen Ansprüche gelten können. Ein Kerngedanke der Erfindung ist darin zu sehen, dass ein Zeitstempel eingesetzt wird, welcher den Zeitpunkt angibt, zu dem ein Ereignis, welches eine Sicherheitsfunktion auslöst, erfasst wurde, wobei der Zeitstempel entlang der die Sicherheitsfunktion ausführenden Sicherheitskette weitergereicht wird und an einem beliebigen Punkt der Sicherheitskette, insbesondere am Ende der Sicherheitskette im letzten Teilsystem-Modul, welches die Aktorik steuert, zur Überprüfung der Reaktionszeit der Sicherheitsfunktion eingesetzt wird, wobei aus der Differenz des aktuellen Zeitpunkts und des durch den Zeitstempel angegeben Zeitpunkts eine tatsächliche Reaktionszeit ermittelt und mit einem Sollwert verglichen wird.

Ein Verfahren zum Überwachen der Reaktionszeit einer durch ein Sicherheitssystem bereitgestellten Sicherheitsfunktion, wobei das Sicherheitssystem wenigstens ein erstes und wenigstens ein zweites Teilsystem-Modul umfasst, weist die in Anspruch 1 definierten Schritte auf.

Die wenigstens zwei Teilsystem-Module bilden eine Sicherheitskette, wobei das erste Teilsystem-Modul insbesondere den Anfang und das zweite Teilsystem-Modul das Ende der Sicherheitskette bildet.

Die Sicherheitskette, d.h. das Sicherheitssystem, kann weitere Teilsystem-Module, auch eine Mehrzahl weiterer Teilsystem-Module, umfassen, wobei diese insbesondere entlang der Sicherheitskette zwischen dem ersten und zweiten Teilsystem-Modul angeordnet sind. Dementsprechend umfasst das Sicherheitssystem vorteilhaft wenigstens ein drittes Teilsystem-Modul, wobei das Übertragen des Zeitstempels vom ersten Teilsystem-Modul zum zweiten Teilsystem-Modul über das wenigstens eine dritte Teilsystem-Modul erfolgt. Somit wird in dieser Ausführungsform des Verfahrens der erzeugte Zeitstempel vom ersten Teilsystem-Modul zu einem dritten Teilsystem-Modul übertragen und von dem dritten Teilsystem-Modul zu dem zweiten Teilsystem-Modul oder zu einem weiteren dritten Teilsystem-Modul weiterübertragen.

Der Vergleichswert, mit dem die ermittelte Reaktionszeit im zweiten Teilsystem-Modul verglichen wird, ist vorzugsweise im zweiten Teilsystem-Modul hinterlegt. Denkbar ist auch, dass der Vergleichswert durch das zweite Teilsystem-Modul abrufbar ist, um eine dynamische Anpassung des Vergleichswertes zu ermöglichen.

Das Auslösen der vorbestimmten Sicherheitsreaktion in Abhängigkeit des Vergleichsergebnisses erfolgt insbesondere bei negativem Vergleichsergebnis, während bei positivem Vergleichsergebnis die funktional sicheren Daten auf übliche Weise weiterverarbeitet werden, um die Sicherheitsfunktion auszuführen, deren Reaktionszeit überwacht wird. Das Weiterverarbeiten der funktional sicheren Daten kann auch negativem Vergleichsergebnis vorgesehen sein, wobei die vorbestimmte Sicherheitsreaktion zusätzlich ausgeführt wird. Ein negatives Vergleichsergebnis liegt insbesondere dann vor, wenn die ermittelte Reaktionszeit über dem Vergleichswert liegt.

Zum Erzeugen des Zeitstempels umfasst das erste Teilsystem-Modul vorzugsweise einen Zeitgeber, insbesondere in Form einer Echtzeituhr. Ferner umfasst das zweite Teilsystem-Modul vorzugsweise ebenfalls einen Zeitgeber, ebenfalls insbesondere ausgebildet als Echtzeituhr, um in Abhängigkeit des empfangenen Zeitstempels die Reaktionszeit der Sicherheitsfunktion zu ermitteln.

Besonders vorteilhaft kann vorgesehen sein, dass alle Teilsystem-Module des Sicherheitssystems einen Zeitgeber aufweisen, so dass jedes Teilsystem-Modul des Sicherheitssystems die Reaktionszeit bis zu dem jeweiligen Teilsystem-Modul überwachen kann.

Um eine vorgegebene Genauigkeit bei der Ermittlung der Reaktionszeit zu gewährleisten, werden die Zeitgeber im ersten und zweiten Teilsystem-Modul vorteilhaft miteinander synchronisiert. Umfasst das Sicherheitssystem weitere Teilsystem-Module, die einen Zeitgeber aufweisen, so werden vorteilhaft auch diese Zeitgeber in die Synchronisation einbezogen. Mit besonderem Vorteil erfolgt eine Synchronisation der Zeitgeber mit einem Referenz-Zeitgeber, wobei dieser in einem Teilsystem-Modul des Sicherheitssystems oder in einem separaten Referenz-Modul angeordnet sein kann. Die Synchronisation der Zeitgeber untereinander bzw. mit dem Referenz-Zeitgeber kann bevorzugt zyklisch in vorgegebenen Zeitabständen erfolgen, wobei die Zeitabstände vorteilhaft in Abhängigkeit des Gangfehlers der eingesetzten Zeitgeber festgelegt werden. Vorteilhaft kann alternativ oder zusätzlich auch eine Synchronisation vor Inbetriebnahme des jeweiligen Teilsystem-Moduls vorgesehen sein. Durch eine Synchronisation vor Inbetriebnahme des jeweiligen teilsystem-Moduls kann sichergestellt werden, dass die für die Überwachung der Reaktionszeit der Sicherheitsfunktion eingesetzten Zeitgeber bei Ausführen der Sicherheitsfunktion bereits synchronisiert sind. Der Referenz-Zeitgeber kann seinerseits vorteilhaft in vorgegebenen Zeitabständen mit einen Zeitnormal synchronisiert werden, beispielsweise mit Hilfe des Zeitzeichensenders DCF77. Besonders bevorzugt kann der Referenz-Zeitgeber in einer Steuerungseinrichtung eines Automatisierungssystems angeordnet sein, wobei die Steuerungseinrichtung insbesondere ein Teilsystem-Modul der die Sicherheitsfunktion ausführenden Sicherheitskette ist, und beispielsweise als SPS (Speicherprogrammierbare Steuerung) ausgebildet ist. Mit anderen Worten ist die Steuerungseinrichtung vorzugsweise führend bei der Synchronisation der Zeitgeber und gibt die Referenz-Zeit vor.

In einem häufigen Anwendungsfall wird die Sicherheitsfunktion durch einen Sensor, wie zum Beispiel ein Not-Aus-Taster, ein Lichtgitter, eine Schutztür oder ähnliches, ausgelöst, wobei der Sensor an ein Eingabe-Modul eines Automatisierungssystems angeschlossen ist.

Dementsprechend ist in der bevorzugten Ausführungsform des Sicherheitssystems das erste Teilsystem-Modul als ein Eingabe-Modul eines Automatisierungssystems ausgebildet, an welches ein Sensor angeschlossen ist, wobei das Erzeugen funktional sicherer Daten in dem ersten Teilsystem-Modul erfindungsgemäß ein Erfassen eines Sensorsignals mittels des Sensors und das Verarbeiten des erfassten Sensorsignals zu den funktional sicheren Daten umfasst.

Der vom ersten Teilsystem-Modul erzeugte Zeitstempel gibt in dieser Ausführungsform den Zeitpunkt an, zu dem das Sensorsignal vom Sensor erfasst wurde. Zu diesem Zweck ist vorteilhaft im ersten Teilsystem-Modul ein Sensorparameter hinterlegt, welcher eine Reaktionszeit des an das erste Teilsystem-Modul angeschlossenen Sensors angibt, wobei das erste Teilsystem-Modul den Zeitstempel in Abhängigkeit des Sensorparameters erzeugt.

Zusätzlich zum Sensorparameter können im Eingabe-Modul weitere, das Eingabe-Modul betreffende, Parameter hinterlegt sein, wie zum Beispiel eine Filterzeit, die einem Eingang des Eingabe-Moduls zum Anschließen eines Sensors zugeordnet ist. Eine solche Filterzeit gibt typischerweise eine Verzögerungszeit an, welche dazu dient, ein Rauschen am Eingang zu filtern, um unbeabsichtigte Änderungen des Signalzustands am Eingang zu vermeiden. Ein weiterer Parameter könnte zum Beispiel eine Firmware-Zeit sein, welche die Zeit angibt, die das Eingabe-Modul zur Datenverarbeitung mittels seiner Firmware benötigt

Ist beispielsweise im Eingabe-Modul als Sensorparameter eine Reaktionszeit von 260 ms hinterlegt und als Filterzeit des entsprechenden Anschlusses ein Wert vom 3 ms hinterlegt, so erzeugt das Eingabe-Modul beispielsweise einen Zeitstempel, der einen Zeitpunkt angibt, welcher der aktuellen, vom Zeitgeber bereitgestellten Zeit minus 263 ms entspricht, so dass der Zeitstempel den Zeitpunkt angibt, zu dem das den Sensor auslösende Ereignis eingetreten ist.

Der erzeugte Zeitstempel wird erfindungsgemäß zusammen mit den erzeugten funktional sicheren Daten zum nächsten Teilsystem-Modul der Sicherheitskette, im einfachsten Fall direkt zum zweiten Teilsystem-Modul übertragen, wobei vorteilhaft beim Übertragen die funktional sicheren Daten und der erzeugte Zeitstempel gemäß einem zugrunde liegenden sicheren Datenübertragungsprotokoll zusammen in einem gemeinsamen protokollspezifischen Datenbereich oder getrennt voneinander in separaten protokollspezifischen Datenbereichen übertragen werden.

Hierbei ist es möglich, die Datenübertragung, insbesondere transparent, in bestehende (sichere) Protokolle zu integrieren. Es ist aber auch möglich, neue (sichere) Protokolle vorzusehen, mit deren Hilfe die Datenübertragung implementiert wird.

In einem häufigen Anwendungsfall bewirkt die Sicherheitsfunktion das Ausführen einer sicherheitsgerichteten Aktion eines Aktors, beispielsweise das Abschalten einer gefahrbringenden Einrichtung, beispielsweise durch Abschalten eines Motors. Dementsprechend ist in der erfindungsgemäßen Ausführungsform des Sicherheitssystems das zweite Teilsystem-Modul als ein Ausgabe-Modul eines Automatisierungssystems ausgebildet, an welches ein Aktor angeschlossen ist. Dazu ist im zweiten Teilsystem-Modul ein Aktorparameter hinterlegt, welcher eine Reaktionszeit des wenigstens einen an das zweite Teilsystem-Modul angeschlossenen Aktors angibt, wobei das zweite Teilsystem-Modul die Reaktionszeit der Sicherheitsfunktion in Abhängigkeit des Aktorparameters ermittelt. In der hinterlegten Reaktionszeit des Aktors kann beispielsweise auch eine Nachlaufzeit eines Motors berücksichtigt sein.

Denkbar ist auch, dass das erste Teilsystem-Modul als intelligenter Sensor und/oder das zweite Teilsystem-Modul als intelligenter Aktor ausgebildet ist.

In einer bevorzugten Ausfiihrungsform des Verfahrens umfasst das Sicherheitssystem wenigstens ein Teilsystem-Modul, welches als Steuereinrichtung eines Automatisierungssystems ausgebildet ist.

Bei einer mehrkanaligen Ausgestaltung des Sicherheitssystems können auch mehrere erste und/oder zweite Teilsystem-Module vorgesehen sein, wobei in diesem Fall auch mehrere erste Teilsystem-Module mit dem gleichen, als Steuereinrichtung ausgebildeten dritten Teilsystem-Modul verbunden sein können.

In einer solchen Ausgestaltung kann vorgesehen sein, dass die Steuereinrichtung wenigstens zwei Zeitstempel empfängt, welche jeweils individuellen funktional sicheren Daten zugeordnet sind, insbesondere von zwei separaten, für eine redundante Sensorik vorgesehenen Eingabe-Modulen des Sicherheitssystems. Besonders vorteilhaft wählt die Steuereinrichtung bei einer solchen Ausgestaltung einen der Zeitstempel in Abhängigkeit einer vorgegebenen Parametrierung aus und überträgt nur diesen Zeitstempel weiter an ein anderes Teilsystem-Modul des Sicherheitssystems, insbesondere an wenigstens ein in der Sicherheitskette nachfolgendes Teilsystem-Modul.

Die Parametrierung und damit die Auswahl des weiter zu übertragenden Zeitstempels hängen insbesondere von der logischen Verknüpfung der von der Steuerungseinrichtung empfangenen funktional sicheren Daten ab, welche den Zeitstempeln zugeordnet sind. Im einfachsten Fall wird jeweils der Zeitstempel weiterübertragen, welcher dem frühesten Zeitpunkt entspricht und somit zur Ermittlung der längsten, d.h. schlechtesten Reaktionszeit der Sicherheitsfunktion führt.

Insbesondere sind den wenigstens zwei Zeitstempeln funktional sichere Eingangsdaten zugeordnet, wobei die Steuereinrichtung diese Eingangsdaten zu funktional sicheren Ausgangsdaten verarbeitet und zusammen mit dem ausgewählten Zeitstempel weiterüberträgt.

Es ist auch denkbar, dass an ein Eingabe-Modul, welches insbesondere das erste Teilsystem-Modul des Sicherheitssystems bildet, wenigstens zwei Sensoren angeschlossen sind, wobei für jeden der angeschlossenen Sensoren ein Zeitstempel erzeugt und von diesen Zeitstempeln in Abhängigkeit einer vorgegebenen Parametrierung des Eingabe-Moduls ein Zeitstempel ausgewählt und übertragen wird.

Ein System zur Durchführung eines Verfahrens wie oben beschriebene, welches zum Ausführen einer Sicherheitsfunktion ausgebildet ist, umfasst wenigstens ein erstes Teilsystem-Modul, welches zum Erzeugen funktional sicherer Daten und zum Erzeugen eines den funktional sicheren Daten zugeordneten Zeitstempels ausgebildet ist, und wenigstens ein zweites Teilsystem-Modul, welches über einen Datenübertragungskanal mit dem ersten Teilsystem-Modul verbunden ist, und welches dazu ausgebildet ist, einen Zeitstempel von dem ersten Teilsystem-Modul zu empfangen, in Abhängigkeit des empfangenen Zeitstempels eine Reaktionszeit der Sicherheitsfunktion zu ermitteln, die ermittelte Reaktionszeit mit einem Vergleichswert zu vergleichen, und in Abhängigkeit des Vergleichsergebnisses eine vorbestimmte Sicherheitsreaktion auszulösen.

Es sei noch angemerkt, dass die Teilsystem-Module des Sicherheitssystems zur Übertragung der Daten und Zeitstempel an wenigstens einen Datenübertragungskanal angeschlossen sind, sowie dass die Teilsystem-Module des Sicherheitssystems insbesondere jeweils eine Teilsicherheitsfunktion bereitstellen und für eine funktional sichere Datenverarbeitung und/oder -übertragung ausgebildet sind.

Es sei ferner angemerkt, dass der Begriff des Datenübertragungskanals nicht zwingend das Vorhandensein eines Bussystems bedingt. Vielmehr liegen im Rahmen der Erfindung auch Teilsystem-Module, z.B. modulare Maschinen, wobei die Module zur Datenübertragung nicht über Bussysteme miteinander vernetzt sind. Eine mögliche Alternative im Rahmen des Begriffs "Datenübertragungskanal" sind beispielsweise Teilsystem-Module, bei denen sich der "Datenübertragungskanal", an welchen diese angeschaltet sind, aus jeweiligen internen, miteinander verschalteten Backplanebussen zusammensetzt. Die Teilsystem-Module können somit z.B. auch modulare Geräte mit internem Backplanebus sein. Auch ist denkbar, dass der Datenübertragungskanal über mehrere, insbesondere auch hierarchisch strukturierte Kommunikationsnetzwerke verläuft, die beispielsweise über ein Koppelmodul oder Gateway miteinander verbunden sind, wobei das Koppelmodul bzw. das Gateway in diesem Fall insbesondere ein Teilsystem-Modul des Sicherheitssystems bildet.

Die vorliegende Erfindung bietet viele Vorteile. Vor allem ermöglicht sie auf einfache Weise die permanente Überwachung der Reaktionszeit einer von einer Sicherheitskette in einem modularen Sicherheitssystem ausgeführten Sicherheitsfunktion während des laufenden Betriebs.

Der Anwender hat die Aufgabe, die Einhaltung der erforderlichen Reaktionszeiten nachzuweisen. Diese Nachweise sind heute stets mit Aufwand verbunden und werden daher oft entweder gar nicht oder unvollständig erstellt oder im Falle von Änderungen nicht nachgezogen.

Bei aus dem Stand der Technik bekannten Lösungen wird in der Regel als einzuhaltende Reaktionszeit einer Sicherheitsfunktion vom Anwender ein Wert vorgegeben, der sich aus der Summe von Watchdog-Zeiten ergibt, die für die einzelnen Teilsystem-Module des die Sicherheitsfunktion ausführenden Sicherheitssystems definiert werden.

Wird jedoch ausschließlich mit Watchdogzeiten gerechnet, ist das Ergebnis eher konservativ und Ziele werden nicht erreicht oder verhältnismäßig viel Abstand ist zu wählen.

Wird mit typischen Zeiten der Teilsystem-Module gerechnet, ist das Ergebnis nicht auf Dauer garantiert und auch nicht ausreichend gegen Veränderung/Manipulation geschützt. Mit Nachlaufmessungen das typische Zeitverhalten eines fehlerfreien Systems erfasst werden, dieses hat jedoch keine Aussagekraft bezüglich des Systemverhaltens bei zum Beispiel einer Verschlechterung der Signalübertragung.

Die Vorgabe von Reaktionszeiten, die auch bei einer Verschlechterung des Systemverhaltens in der Regel sicher eingehalten werden können, aber deutlich unter einer Reaktionszeit liegen, die sich aus der Summe von Watchdogzeiten ergibt, ist problematisch, da der Nachweis, dass diese Reaktionszeiten eingehalten werden, mit aus dem Stand der Technik bekannten Verfahren nicht möglich ist.

Ein besonderer Vorteil der Erfindung besteht darin, genau dies zu ermöglichen. Durch Weitergabe der Signalwerte mit Zeitstempel kann die Überwachung der Einhaltung einer sicheren Reaktionszeit gewährleistet werden, die deutlich besser ist, als beim heutigen Aufsummieren von Watchdogzeiten und deutlich verlässlicher, als das Rechnen mit typischen Werten. Dadurch ermöglicht die Erfindung schnellere Reaktionszeiten, kürzere Sicherheitsabstände und mehr Verfügbarkeit.

Die Weitergabe der Erfassungszeit eines Signals ist somit auch eine wichtige Grundlage beispielsweise für eine Anlagenübergreifende sichere Kommunikation und dem Zusammenstellen modularer Anlagen im Industrie 4.0-Umfeld.

Diese und weitere Merkmale und Vorteile der vorliegenden Erfindung ergeben sich auch aus den Ausführungsbeispielen, welche nachfolgend unter Bezugnahme auf die beiliegenden Zeichnungen näher erläutert werden. Es zeigt dabei
- Fig. 1: eine schematische Darstellung eines ersten Ausführungsbeispiels eines Automatisierungssystems, in welchem ein erfindungsgemäßes Verfahren vorteilhaft ausgeführt werden kann,
- Fig. 2: eine schematische Darstellung eines zweiten Ausführungsbeispiels eines Automatisierungssystems, in welchem ein erfindungsgemäßes Verfahren vorteilhaft ausgeführt werden kann,
- Fig. 3: eine schematische Darstellung eines ersten bevorzugten Ausführungsbeispiels eines Sicherheitssystems, und
- Fig. 4: eine schematische Darstellung eines zweiten bevorzugten Ausführungsbeispiels eines Sicherheitssystems.

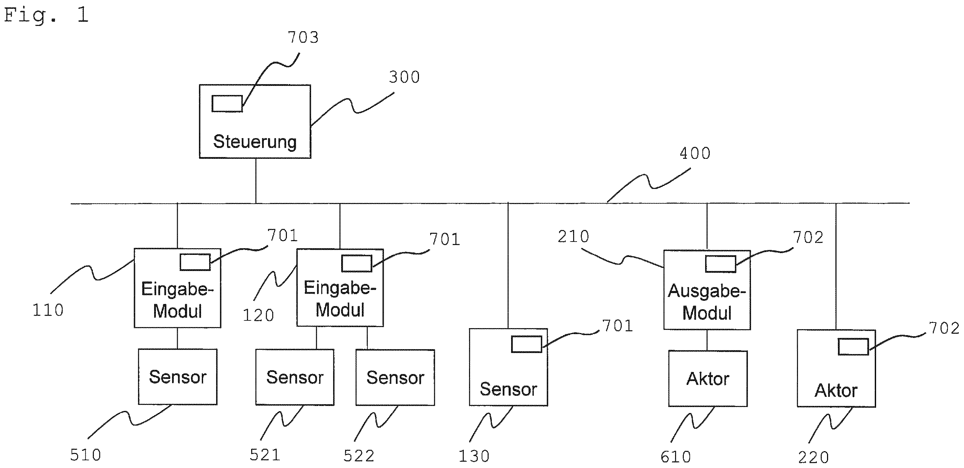

Die Figur 1 zeigt eine schematische Darstellung eines Automatisierungssystems, wobei im dargestellten Ausführungsbeispiel mehrere Eingabe- und Ausgabe-Module über eine Kommunikations-Netzwerk 400 mit einer zentralen Steuereinrichtung 300 verbunden sind. Beispielhaft ist an das Eingabe-Modul 110 ein Sensor 510 angeschlossen, und an das Eingabe-Modul 120 zwei Sensoren 521 und 522, wobei die zwei Sensoren insbesondere als redundante Sensoren eingesetzt werden. Ferner ist ein intelligenter Sensor 130 vorgesehen, welcher direkt mit dem Kommunikationsnetzwerk verbunden ist und mit der Steuerung 300 kommunizieren kann.

Ferner ist im dargestellten Ausführungsbeispiel ein Ausgabe-Modul 210 vorgesehen, welches über das Kommunikations-Netzwerk 400 mit der Steuereinrichtung 300 verbunden ist, sowie ein intelligenter Aktor, welcher direkt mit dem Kommunikationsnetzwerk verbunden ist und mit der Steuerung 300 kommunizieren kann.

In dem in Fig. 1 dargestellten System kann das erfindungsgemäße Verfahren ausgeführt werden, wobei je nachdem, für welche Sicherheitsfunktion die Reaktionszeit überwacht werden soll, unterschiedliche der dargestellten Module Teilsystem-Module des Sicherheitssystems bilden können, welches die Sicherheitsfunktion ausführt.

Beispielsweise kann das Sicherheitssystem das Eingabe-Modul 110 als erstes Teilsystem-Modul und das Ausgabe-Modul 210 als zweites Teilsystem-Modul umfassen, wobei das Eingabe-Modul 110 Sensorsignale des angeschlossenen Sensors 510 zu funktional sicheren Daten verarbeitet. Zugeordnet zu den funktional sicheren Daten erzeugt das Eingabe-Modul 110 einen Zeitstempel, wobei das Eingabe-Modul 110 zu diesem Zweck eine Echtzeituhr 701 umfasst.

Das Eingabe-Modul 110 überträgt die funktional sicheren Daten zusammen mit dem erzeugten Zeitstempel zu der Steuerung 300, welche in diesem Ausführungsbeispiel ein drittes Teilsystem-Modul des Sicherheitssystems bildet. Die Steuerung verarbeitet die vom Eingabe-Modul 110 empfangenen Eingangsdaten und erzeugt mit Hilfe eines in der Steuerung 300 hinterlegten Anwenderprogramms Ausgangsdaten, welche die Steuerung an das Ausgabe-Modul 210 überträgt. Zusammen mit den Ausgangsdaten wird von der Steuerung 300 der vom Eingabe-modul 110 erzeugte Zeitstempel an das Ausgabe-Modul 210 ungeändert weiterübertragen.

Das Ausgabe-Modul 210 ermittelt eine Reaktionszeit der Sicherheitsfunktion in Abhängigkeit des empfangenen Zeitstempels, vergleicht die ermittelte Reaktionszeit mit einem Vergleichswert, und löst in Abhängigkeit des Vergleichsergebnisses eine vorbestimmte Sicherheitsreaktion aus. Zum Ermitteln der Reaktionszeit weist das Ausgabe-Modul 210 eine Echtzeituhr 702 auf.

Im beschriebenen Beispiel wird die Sicherheitsfunktion durch den an das Eingabe-Modul 110 angeschlossenen Sensor 510, welcher beispielsweise als Not-Aus-Taster, Lichtgitter oder Schutztür ausgebildet sein kann, ausgelöst. Der vom Eingabe-Modul 110 erzeugte Zeitstempel gibt in dieser Ausführungsform vorteilhaft den Zeitpunkt an, zu dem das Sensorsignal vom Sensor 510 erfasst wurde. Zu diesem Zweck ist vorteilhaft im Eingabe-Modul 110 ein Sensorparameter hinterlegt, welcher eine Reaktionszeit des Sensors 510 angibt, wobei das Eingabe-Modul 110 den Zeitstempel in Abhängigkeit des Sensorparameters erzeugt.

Zusätzlich zum Sensorparameter können im Eingabe-Modul 110 weitere, das Eingabe-Modul 110 betreffende, Parameter hinterlegt sein, wie zum Beispiel eine Filterzeit, die dem Eingang des Eingabe-Moduls 110 zum Anschließen des Sensors 510 zugeordnet ist. Eine solche Filterzeit gibt typischerweise eine Verzögerungszeit an, welche dazu dient, ein Rauschen am Eingang zu filtern, um unbeabsichtigte Änderungen des Signalzustands am Eingang zu vermeiden.

Ist beispielsweise im Eingabe-Modul 110 als Sensorparameter eine Reaktionszeit von 260 ms hinterlegt und als Filterzeit des entsprechenden Anschlusses ein Wert vom 3 ms hinterlegt, so erzeugt das Eingabe-Modul 110 beispielsweise einen Zeitstempel, der einen Zeitpunkt angibt, welcher der aktuellen, vom Zeitgeber 701 bereitgestellten Zeit minus 263 ms entspricht, so dass der Zeitstempel den Zeitpunkt angibt, zu dem das den Sensor 510 auslösende Ereignis eingetreten ist.

Im dargestellten Beispiel bewirkt die Sicherheitsfunktion das Ausführen einer sicherheitsgerichteten Aktion eines Aktors 610, beispielsweise das Abschalten einer gefahrbringenden Einrichtung, beispielsweise eines Motors. Vorteilhaft ist im Ausgabe-Modul 210 ein Aktorparameter hinterlegt, welcher eine Reaktionszeit des wenigstens einen an das Ausgabe-Modul 210 angeschlossenen Aktors 610 angibt, wobei das Ausgabe-Modul 210 die Reaktionszeit der Sicherheitsfunktion in Abhängigkeit des Aktorparameters ermittelt.

In dem in Fig. 1 dargestellten Automatisierungssystem sind eine Vielzahl weiterer Kombination von Modulen denkbar, welche ein Sicherheitssystem bilden können. Beispielsweise könnten der intelligente Sensor 130 und der intelligente Aktor 220 ein Sicherheitssystem bilden, wobei in diesem Fall der intelligente Sensor 130 über eine entsprechende Verarbeitungslogik zum Erzeugen von Ausgangsdaten verfügt.

Wesentlich ist, dass jeweils das erste Teilsystem-Modul dazu ausgebildet ist, einen Zeitstempel zu erzeugen und das zweite Teilsystem-Modul dazu ausgebildet ist, in Abhängigkeit des Zeitstempels eine Reaktionszeit zu ermitteln, wobei die beiden Module zu diesem Zweck insbesondere jeweils eine Echtzeituhr aufweisen.

Auch die Steuerung 300 kann als zweites Teilsystem-Modul vorgesehen sein und dementsprechend die Reaktionszeit ermitteln, wobei die Steuerung 300 zu diesem Zweck ebenfalls eine Echtzeituhr 703 aufweist.

Es sind auch Sicherheitssysteme denkbar, welche mehrere Eingabe- und/oder Ausgabe-Module umfassen.

Die Echtzeituhren 701, 702 und 703 werden vorzugsweise miteinander synchronisiert, wobei vorteilhaft eine Synchronisation der Echtzeituhren 701 und 702 jeweils mit der Echtzeituhr 703 der Steuerung 300 erfolgt, welche eine Referenz-Zeit vorgibt. Die Synchronisation erfolgt vorzugsweise zumindest bei Inbetriebnahme des jeweiligen Moduls, sowie vorteilhaft in vorgegeben Zeitabständen.

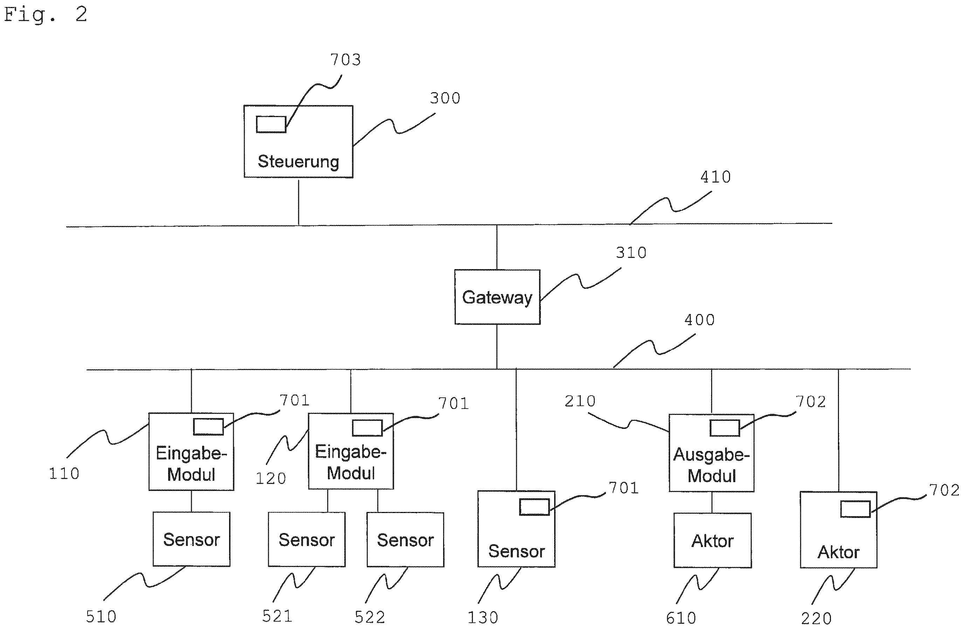

Das Automatisierungssystem kann auch, wie in Fig. 2 dargestellt, eine hierarchische Kommunikationsstruktur aufweisen, wobei in dem in Fig. 2 dargestellten Beispiel ein erstes Kommunikations-Netzwerk 400 und ein zweites Kommunikations-Netzwerk 410 vorgesehen ist, beispielsweise ausgebildet als Bussystem 400 und als Ethernet-basiertes Netzwerk 410. Im dargestellten Beispiel sind die Netzwerke 400 und 410 über ein Gateway 310 miteinander verbunden, wobei auch das Gateway 310 ein teilsystem-Modul des Sicherheitssystems bilden kann.

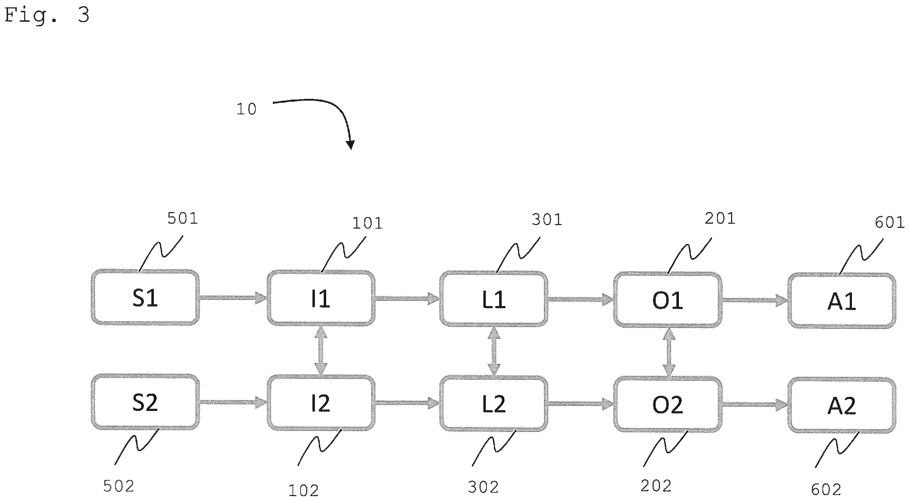

Fig. 3 zeigt schematisch ein beispielhaftes Sicherheitssystem 10, welches zweikanalig aufgebaut ist und zwei Sensoren 501 und 502, zwei Eingabe-Module 101 und 102, zwei Logik-Module 301 und 302, sowie zwei Ausgabe-Module 201 und 202, mit daran jeweils angeschlossenen Aktoren 601 und 602 umfasst.

In dem in Fig. 3 dargestellten Beispiel eines Sicherheitssystems 10 verläuft beispielsweise ein erster Datenübertragungskanal vom Sensor 501, über das Eingabe-Modul 101, das Logik-Modul 301 und das Ausgabe-Modul 201 zum Aktor 601, sowie ein zweiter Datenübertragungskanal vom Sensor 502, über das Eingabe-Modul 102, das Logik-Modul 302 und das Ausgabe-Modul 202 zum Aktor 602. Ferner sind im dargestellten Beispiel die Eingabe-Module 101 und 102, die Logik-Module 301 und 302, sowie die Ausgabe-Module 201 und 202 jeweils dazu ausgebildet, miteinander zu kommunizieren. Dementsprechend können auch andere Datenübertragungskanäle als die oben genannten definiert werden.

Die in Fig. 3 dargestellten Eingabe-Module 101 und 102 können beispielsweise in dem in Fig. 1 und Fig. 2 dargestellten Eingabe-Modul 120, sowie die Logik-Module 301 und 302 in der Steuerung 300 angeordnet sein.

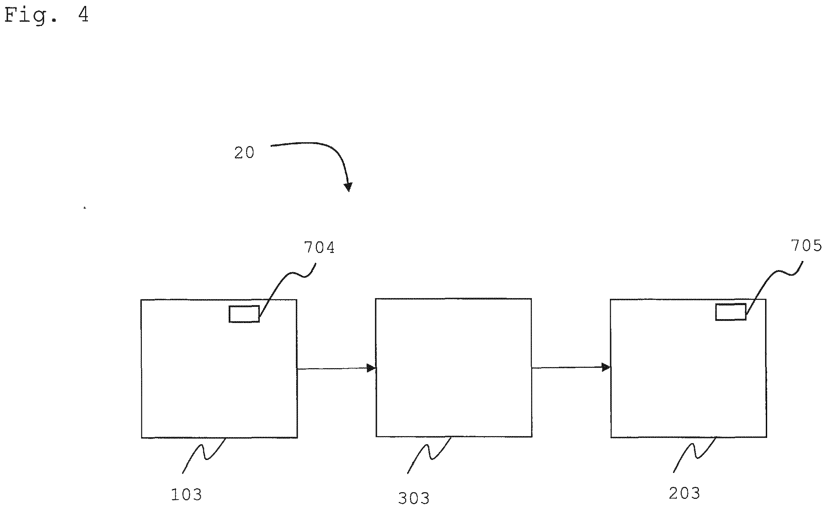

Fig. 4 zeigt ein weiteres Ausführungsbeispiel eines Sicherheitssystems 20, welches drei Maschinen 103, 303 und 203 umfasst. Die Sicherheitsfunktion im dargestellten Beispiel besteht darin, bei Ausfall der Maschine 103 automatisch auch die Maschinen 303 und 203 abzuschalten. Zur Überwachung der Reaktionszeit dieser Sicherheitsfunktion weist die Maschine 103 eine Echtzeituhr auf und ist dazu ausgebildet, bei Auftreten eines Ausfalls einen Zeitstempel zu erzeugen und diesen zusammen mit einem Abschaltsignal an die Maschine 303 zu übertragen. Die Maschine 303 schaltet sich bei Empfang des Abschaltsignals ab und sendet ein Abschaltsignal zu der Maschine 203, zusammen mit dem von der Maschine 103 empfangenen Zeitstempel. Die Maschine 203 schaltet sich bei Empfang des Abschaltsignals ab und ermittelt in Abhängigkeit des empfangenen Zeitstempels und mit Hilfe einer Echtzeituhr 705 die Reaktionszeit der Sicherheitsfunktion, vergleicht diese mit einem Sollwert und führt eine Sicherheitsreaktion aus, sofern die Reaktionszeit über dem Sollwert liegt.

Es sei angemerkt, dass jedes der beschriebenen Teilsystem-Module sowohl über eine Datenübertragungs- als auch über eine Datenempfangskomponente verfügen kann, so dass eine bidirektionale Datenübertragung möglich ist.

Durch die Erfindung wird vorteilhaft ermöglicht, dass sichere Eingabebaugruppen, Steuerungen und Ausgabebaugruppen zur Laufzeit nicht nur Variablenwerte, sondern auch Zeitstempel bearbeiten, um so zu entscheiden, ob die sicheren Ausgänge auch unter Berücksichtigung dieser erweiterten Sicherheitsinformationen angesteuert werden dürfen. Das ermöglicht sichere Berechnungen mit realistischen Werten, die sich im Betrieb auch dynamisch verändern können.

Die Programmierung und/oder Buskonfiguration schließt vorteilhaft auch die angeschlossenen sicheren Sensoren und Aktoren mit ein. Sensoren und Aktoren werden mit im Gerätekatalog der sicheren Programmieroberfläche verwaltet, um Parameter möglichst nur einmalig eingeben zu müssen bzw. einen Import zu ermöglichen. Durch die Sensor-/Aktor-Projektierung werden sichere E/A-Baugruppen auch implizit kompatibel zum Sensor/Aktor parametriert, so dass eine Geräteparametrierung durch den Anwender entfällt. Beim Einfügen von Sensoren und/oder Aktoren in das sichere Anwenderprogramm werden implizit auch die sicherheitstechnischen Kennwerte des Bauteils, insbesondere ein zugeordnete Reaktionszeit) aus der Bauteilebibliothek bzw. dem Gerätekatalog in das sichere Anwenderprogramm übernommen.

Der Anwender gibt seine Vorgaben, d.h. die Spezifikation der Sicherheitsfunktionen, als Ergebnis der Risikobeurteilung in die sichere Programmieroberfläche ein und diese verifiziert selbsttätig die Ergebnisse.

Hierzu verarbeitet das Gesamtsystem die Werte rechnerisch und liefert dem Anwender ein Ergebnis je Sicherheitsfunktion sowie ein Gesamtergebnis über alle Sicherheitsfunktionen (OK / nicht OK).

Vorteilhaft werden im Anlauf sowie im laufenden Betrieb Echtzeituhren zwischen sicherer Steuerung und sicheren Modulen synchronisiert, da diese benötigt werden, um das Alter einer Information/Nachricht und damit die Reaktionszeit einer Sicherheitsfunktion zu ermitteln.

Die Eingabebaugruppe erhält Informationen über die angeschlossenen Sensoren, insbesondere deren Reaktionszeit, ermittelt den Zeitstempel der Signalerfassung intern anhand seiner Parametrierung und Geräteeigenschaften und übergibt je Kanal beispielsweise die folgenden Werte an die nachgelagerte Einheit:
1. Signalwert (FALSE / TRUE /Analogwert)
2. Signalstatus (good/bad/ggf. Fehlercode)
3. Zeitstempel (= aktuelle Zeit - Filterzeit des Moduls - Reaktionszeit des Sensors)

Die nachgelagerte Einheit kann je nach Ausgestaltung des Sicherheitssystems eine sichere Steuerung oder ein anderes der oben beschriebenen Module oder gegebenenfalls sogar ein in einer Cloud angeordnetes Modul sein.

Die sichere Steuerung, als Beispiel für eine nachgelagerte Einheit, ist somit in der Lage zu beurteilen, ob die Information aktuell genug ist und sicher genug ist.

Ein Code-Analyzer ermittelt die Signalflüsse in der sicheren Anwendersoftware und ermittelt wiederum darauf basierend die Ausgangssignale zur Weitergabe an die benachbarte Logikeinheit oder Ausgabebaugruppe.

Der Code-Analyzer stellt die Ergebnisse dem Anwender zur Verfügung. Bei Bedarf kann der Anwender hier das ermittelte Ergebnis nachbearbeiten.

Der Nutzen der Erfindung besteht insbesondere darin, dass durch Weitergabe der Signalwerte mit Zeitstempel die sichere Reaktionszeit deutlich besser ist, als beim heutigen Aufsummieren von Watchdogzeiten und deutlich verlässlicher, als das Rechnen mit typischen Werten.

## Patentansprüche

1. Verfahren zum Überwachen der Reaktionszeit einer durch ein Sicherheitssystem (10) bereitgestellten Sicherheitsfunktion, wobei das Sicherheitssystem (10) wenigstens ein erstes und ein zweites Teilsystem-Modul (110, 210) umfasst, mit den Schritten:
- Erzeugen funktional sicherer Daten in dem ersten Teilsystem-Modul (110), wobei das erste Teilsystem-Modul (110) als ein Eingabe-Modul eines Automatisierungssystems ausgebildet ist, an welches ein Sensor (510) angeschlossen ist, und wobei das Erzeugen der funktional sicheren Daten in dem ersten Teilsystem-Modul (110) ein Erfassen eines Sensorsignals mittels des Sensors (510) und das Verarbeiten des erfassten Sensorsignals zu den funktional sicheren Daten umfasst,
- Erzeugen eines Zeitstempels im ersten Teilsystem-Modul (110), welcher den funktional sicheren Daten zugeordnet ist, wobei der Zeitstempel den Zeitpunkt angibt, zu dem das Sensorsignal erfasst wurde,
- Übertragen des Zeitstempels zusammen mit den erzeugten funktional sicheren Daten vom ersten Teilsystem-Modul (110) zum zweiten Teilsystem-Modul (210),
- Ermitteln einer Reaktionszeit der Sicherheitsfunktion durch das zweite Teilsystem-Modul (210) in Abhängigkeit des empfangenen Zeitstempels,
- Vergleichen, im zweiten Teilsystem-Modul (210), der ermittelten Reaktionszeit mit einem Vergleichswert, und
- Weiterverarbeiten der funktional sicheren Daten, um die Sicherheitsfunktion auszuführen, deren Reaktionszeit überwacht wird, und/oder Auslösen einer vorbestimmten Sicherheitsreaktion in Abhängigkeit des Vergleichsergebnisses, **dadurch gekennzeichnet, dass** das zweite Teilsystem-Modul (210) als ein Ausgabe-Modul eines Automatisierungssystems ausgebildet ist, an welches ein Aktor (610) angeschlossen ist, und wobei im zweiten Teilsystem-Modul (210) ein Aktorparameter hinterlegt ist, welcher eine Reaktionszeit des wenigstens einen an das zweite Teilsystem-Modul (210) angeschlossenen Aktors (610) angibt, und wobei das zweite Teilsystem-Modul (210) die Reaktionszeit der Sicherheitsfunktion in Abhängigkeit des Aktorparameters ermittelt.

2. Verfahren nach Anspruch 1, wobei das Sicherheitssystem wenigstens ein drittes Teilsystem-Modul umfasst, und wobei das Übertragen des Zeitstempels vom ersten Teilsystem-Modul zum zweiten Teilsystem-Modul über das wenigstens eine dritte Teilsystem-Modul erfolgt.

3. Verfahren nach einem der vorstehenden Ansprüche, wobei wenigstens das erste und zweite Teilsystem-Modul jeweils einen Zeitgeber aufweisen, und wobei eine Synchronisation der Zeitgeber erfolgt, insbesondere zyklisch in vorgegebenen Zeitabständen und/oder vor Inbetriebnahme des jeweiligen Teilsystem-Moduls.

4. Verfahren nach einem der vorstehenden Ansprüche, wobei im ersten Teilsystem-Modul ein Sensorparameter hinterlegt ist, welcher eine Reaktionszeit des an das erste Teilsystem-Modul angeschlossenen Sensors angibt, und wobei das erste Teilsystem-Modul den Zeitstempel in Abhängigkeit des Sensorparameters erzeugt.

5. Verfahren nach einem der vorstehenden Ansprüche, wobei ein Teilsystem-Modul des Sicherheitssystems als Steuereinrichtung eines Automatisierungssystems ausgebildet ist, und wobei die Steuereinrichtung wenigstens zwei Zeitstempel empfängt, welche jeweils individuellen funktional sicheren Daten zugeordnet sind, und wobei die Steuereinrichtung in Abhängigkeit einer vorgegebenen Parametrierung einen der Zeitstempel auswählt und diesen an ein anderes Teilsystem-Modul des Sicherheitssystems weiterüberträgt.

6. System zur Durchführung eines Verfahrens nach einem der Ansprüche 1 bis 5, ausgebildet zum Ausführen einer Sicherheitsfunktion, umfassend
- ein erstes Teilsystem-Modul (110), welches zum Erzeugen funktional sicherer Daten und zum Erzeugen eines den funktional sicheren Daten zugeordneten Zeitstempels ausgebildet ist, wobei das erste Teilsystem-Modul (110) als ein Eingabe-Modul eines Automatisierungssystems ausgebildet ist, an welches ein Sensor (510) angeschlossen ist, und wobei das Erzeugen der funktional sicheren Daten in dem ersten Teilsystem-Modul (110) ein Erfassen eines Sensorsignals mittels des Sensors (510) und das Verarbeiten des erfassten Sensorsignals zu den funktional sicheren Daten umfasst, und wobei der Zeitstempel den Zeitpunkt angibt, zu dem das Sensorsignal erfasst wurde, und
- ein zweites Teilsystem-Modul (210), welches dazu ausgebildet ist, von dem ersten Teilsystem-Modul (110) über eine Kommunikationsverbindung (400) den Zeitstempel zusammen mit von dem ersten Teilsystem-Modul (110) erzeugten funktional sicheren Daten zu empfangen, in Abhängigkeit des empfangenen Zeitstempels eine Reaktionszeit der Sicherheitsfunktion zu ermitteln, die ermittelte Reaktionszeit mit einem Vergleichswert zu vergleichen, und in Abhängigkeit des Vergleichsergebnisses eine vorbestimmte Sicherheitsreaktion auszulösen,
**dadurch gekennzeichnet, dass**
das zweite Teilsystem-Modul (210) als ein Ausgabe-Modul eines Automatisierungssystems (10) ausgebildet ist, an welches ein Aktor (610) angeschlossen ist, wobei in dem Teilsystem-Modul (210) ein Aktorparameter hinterlegt ist, welcher eine Reaktionszeit des wenigstens einen an das zweite Teilsystem-Modul (210) angeschlossenen Aktors (610) angibt, und wobei das zweite Teilsystem-Modul (210) dazu ausgebildet ist, die Reaktionszeit der Sicherheitsfunktion in Abhängigkeit des Aktorparameters zu ermitteln.

## Claims

1. A method for monitoring the reaction time of a safety function provided by a safety system (10), wherein the safety system (10) comprises at least a first and a second subsystem module (110, 210), comprising the steps of:
- generating functionally safe data in the first subsystem module (110), wherein the first subsystem module (110) is designed as an input module of an automation system to which a sensor (510) is connected, and wherein generating the functionally safe data in the first subsystem module (110) comprises acquiring a sensor signal by means of the sensor (510) and processing the acquired sensor signal to form the functionally safe data,
- generating a time stamp in the first subsystem module (110) associated with the functionally safe data, the time stamp indicating the time at which the sensor signal was acquired,
- transmitting the time stamp along with the generated functionally safe data from the first subsystem module (110) to the second subsystem module (210),
- determining, by the second subsystem module (210), a reaction time of the safety function depending on the received time stamp,
- comparing, in the second subsystem module (210), the determined reaction time with a comparison value, and
- further processing the functionally safe data to execute the safety function whose reaction time is monitored, and/or triggering a predetermined safety reaction depending on the comparison result, **characterized in that**
the second subsystem module (210) is designed as an output module of an automation system to which an actuator (610) is connected, and wherein an actuator parameter is stored in the second subsystem module (210) which specifies a reaction time of the at least one actuator (610) connected to the second subsystem module (210), and wherein the second subsystem module (210) determines the reaction time of the safety function depending on the actuator parameter.

2. The method of claim 1, wherein the safety system comprises at least one third subsystem module, and wherein the transmitting of the time stamp from the first subsystem module to the second subsystem module is performed via the at least one third subsystem module.

3. The method of any one of the preceding claims, wherein at least the first and second subsystem module each have a timer, and wherein synchronization of the timers takes place, in particular cyclically at predetermined time intervals and/or prior to start-up of the respective subsystem module.

4. The method of any one of the preceding claims, wherein a sensor parameter is stored in the first subsystem module, which specifies a reaction time of the sensor connected to the first subsystem module, and wherein the first subsystem module generates the time stamp depending on the sensor parameter.

5. The method of any one of the preceding claims, wherein a subsystem module of the safety system is designed as a control device of an automation system, and wherein the control device receives at least two time stamps which are each assigned to individual functionally safe data, and wherein the control device selects one of the time stamps depending on a predetermined parameterization and transmits it on to another subsystem module of the safety system.

6. A system for performing a method according to any one of claims 1 to 5, configured to perform a safety function, comprising
- a first subsystem module (110) which is designed to generate functionally safe data and to generate a time stamp associated with the functionally safe data, wherein the first subsystem module (110) is designed as an input module of an automation system to which a sensor (510) is connected, and wherein generating the functionally safe data in the first subsystem module (110) comprises acquiring a sensor signal by means of the sensor (510) and processing the acquired sensor signal into the functionally safe data, and wherein the time stamp indicates the time at which the sensor signal was acquired, and
- a second subsystem module (210), which is designed to receive the time stamp from the first subsystem module (110) via a communication link (400) together with functionally safe data generated by the first subsystem module (110), to determine a reaction time of the safety function depending on the received time stamp, to compare the determined reaction time with a comparison value, and to trigger a predetermined safety reaction depending on the comparison result, **characterized in that**
the second subsystem module (210) is designed as an output module of an automation system (10) to which an actuator (610) is connected, wherein an actuator parameter is stored in the subsystem module (210) which specifies a reaction time of the at least one actuator (610) connected to the second subsystem module (210), and wherein the second subsystem module (210) is designed to determine the reaction time of the safety function depending on the actuator parameter.

## Revendications

1. Procédé de surveillance du temps de réaction d'une fonction de sécurité fournie par un système de sécurité (10), dans lequel le système de sécurité (10) comprend au moins un premier et un deuxième module de système partiel (110, 210), avec les étapes consistant à
- produire des données sécurisées fonctionnelles dans le premier module de système partiel (110), le premier module de système partiel (110) étant conçu en tant que module d'entrée d'un système d'automatisation, auquel est raccordé un capteur (510), et où la production des données sécurisées fonctionnelles dans le premier module de système partiel (110) comprend une saisie d'un signal de capteur au moyen du capteur (510) et le traitement du signal de capteur saisi pour en faire les données sécurisées fonctionnelles,
- produire une estampille temporelle dans le premier module de système partiel (110), laquelle est attribuée aux données sécurisées fonctionnelles, l'estampille temporelle donnant le moment auquel le signal de capteur a été saisi,
- transmettre l'estampille temporelle ensemble avec les données sécurisées fonctionnelles depuis le premier module de système partiel (110) vers le deuxième module de système partiel (210),
- établir un temps de réaction de la fonction de sécurité par le deuxième module de système partiel (210) en fonction de l'estampille temporelle reçue,
- comparer, dans le deuxième module de système partiel (210), le temps de réaction établi avec une valeur de comparaison, et
- continuer à traiter les données sécurisées fonctionnelles pour remplir la fonction de sécurité dont le temps de réaction est surveillé, et/ou déclencher une réaction de sécurité prédéterminée en fonction du résultat de comparaison,
**caractérisé en ce que**
le deuxième module de système partiel (210) est conçu en tant que module de sortie d'un système d'automatisation, auquel est raccordé un actionneur (610), et dans lequel, dans le deuxième module de système partiel (210) est enregistré un paramètre d'actionneur, lequel donne un temps de réaction de l'au moins un actionneur (610) raccordé au deuxième module de système partiel (210), et dans lequel le deuxième module de système partiel (210) établit le temps de réaction de la fonction de sécurité en fonction du paramètre d'actionneur.

2. Procédé selon la revendication 1, dans lequel le système de sécurité comprend au moins un troisième module de système partiel, et dans lequel la transmission de l'estampille depuis le premier module de système partiel vers le deuxième module de système partiel se produit via l'au moins un troisième module de système partiel.

3. Procédé selon l'une des revendications précédentes, dans lequel au moins le premier et le deuxième modules de système partiel présentent respectivement un temporisateur, et dans lequel se produit une synchronisation des temporisateurs, en particulier de façon cyclique dans des intervalles prédéfinis et/ou avant la mise en service du module de système partiel respectif.

4. Procédé selon l'une des revendications précédentes, dans lequel, dans le premier module de système partiel, est enregistré un paramètre de capteur, lequel donne un temps de réaction du capteur raccordé au premier module de système partiel, et dans lequel le premier module de système partiel produit l'estampille temporelle en fonction du paramètre de capteur.

5. Procédé selon l'une des revendications précédentes, dans lequel un module de système partiel du système de sécurité est conçu en tant qu'équipement de commande d'un système d'automatisation, et dans lequel l'équipement de commande reçoit au moins deux estampilles temporelles, auxquelles sont respectivement attribuées des données sécurisées fonctionnelles individuelles, et dans lequel l'équipement de commande sélectionne l'une des estampilles temporelles en fonction d'un paramétrage prédéfini et transmet ensuite celle-ci à un autre module de système partiel du système de sécurité.

6. Système destiné à exécuter un procédé selon l'une des revendications 1 à 5, conçu pour remplir une fonction de sécurité, comprenant
- un premier module de système partiel (110), lequel est conçu pour produire des données sécurisées fonctionnelles et pour produire une estampille temporelle attribuée aux données sécurisées fonctionnelles, le premier module de système partiel (110) étant conçu en tant que module d'entrée d'un système d'automatisation, auquel est raccordé un capteur (510), et la production des données sécurisées fonctionnelles dans le premier module de système partiel (110) comprenant une saisie d'un signal de capteur au moyen du capteur (510) et le traitement du signal de capteur saisi pour en faire les données sécurisées fonctionnelles, et l'estampille temporelle donnant le moment auquel le signal de capteur a été saisi, et
- un deuxième module de système partiel (210), lequel est conçu pour recevoir l'estampille temporelle ensemble avec les données sécurisées fonctionnelles produites par le premier module de système partiel (110) depuis le premier module de système partiel (110) via une liaison de communication (400), établir un temps de réaction de la fonction de sécurité en fonction de l'estampille temporelle reçue, comparer le temps de réaction établi avec une valeur de comparaison, et déclencher une réaction de sécurité prédéterminée en fonction du résultat de comparaison,
**caractérisé en ce que**
le deuxième module de système partiel (210) est conçu en tant que module de sortie d'un système d'automatisation (10), auquel est complété un actionneur (220), dans lequel dans le deuxième module de système partiel (210) est enregistré un paramètre d'actionneur, lequel donne un temps de réaction de l'au moins un actionneur (220) raccordé au deuxième module de système partiel (210), et dans lequel le deuxième module de système partiel (210) est conçu pour établir le temps de réaction de la fonction de sécurité en fonction du paramètre d'actionneur.
